## Europäisches Patentamt
## European Patent Office
## Office européen des brevets

(19)

(11) Veröffentlichungsnummer: **0 162 337**
**B1**

(12) # EUROPÄISCHE PATENTSCHRIFT

(45) Veröffentlichungstag der Patentschrift:
**03.02.88**

(51) Int. Cl.⁴: **G 21 C 1/02**

(21) Anmeldenummer: **85105139.1**

(22) Anmeldetag: **26.04.85**

(54) **Flüssigmetallgekühlter Kernreaktor mit von Wärmespannungen entlasteter Kerntragstruktur.**

(30) Priorität: **03.05.84 DE 3416398**

(43) Veröffentlichungstag der Anmeldung:
**27.11.85 Patentblatt 85/48**

(45) Bekanntmachung des Hinweises auf die Patenterteilung:
**03.02.88 Patentblatt 88/5**

(84) Benannte Vertragsstaaten:
**AT BE DE FR GB IT NL**

(56) Entgegenhaltungen:
**EP-A-0 091 872**
**EP-A-0 106 753**
**FR-A-2 276 663**
**FR-A-2 333 328**
**FR-A-2 461 335**
**FR-A-2 461 336**
**FR-A-2 524 685**

(73) Patentinhaber: **INTERATOM Gesellschaft mit beschränkter Haftung, Friedrich- Ebert- Strasse, D-5060 Bergisch Gladbach 1 (DE)**

(72) Erfinder: **Wagner, Jürgen, Dipl.- Ing., Zedernweg 11, D-5253 Lindlar (DE)**

(74) Vertreter: **Mehl, Ernst, Dipl.- Ing., Postfach 22 01 76, D-8000 München 22 (DE)**

EP 0 162 337 B1

## Beschreibung

Die vorliegende Erfindung betrifft einen flüssigmetallgekühlten Kernreaktor des sogenannten Pool-Typs nach dem Oberbegriff des 1. Anspruchs. Ein derartiger Reaktor ist zur Zeit in Frankreich unter der Bezeichnung "Super-Phénix" im Bau. Bei dieser Bauart befindet sich das gesamte Primärsystem bestehend aus Reaktorkern, Wärmetauschern, Pumpen usw. in einem in seinem oberen Teil zylindrischen Behälter, der bis zur erforderlichen Höhe mit flüssigem Natrium gefüllt ist. Dabei erreicht das aus dem Reaktorkern aufgeheizt austretende Kühlmittel Temperaturen (z. B. von 550°C), denen die Wand des Reaktortanks aus Festigkeitsgründen nicht ausgesetzt werden darf. Es sind daher zusätzliche Trennwände vorhanden, die vom abgetrennten unteren Teil des Reaktortanks (wo infolge der Abkühlung des Kühlmittels in den Wärmetauschern eine niedrigere Temperatur herrscht - dem sogenannten kalten Sammler) bis über den Kühlmittelspiegel reichen. In dem so gebildeten schmalen Ringraum wird eine Strömung von abgekühltem Kühlmittel aufrechterhalten, das die Reaktortankwand auf zulässigen Temperaturwerten (ca. 400°C) hält. Aus der EP-A-0 091 872 ist ein derartiger Kernreaktor bekannt, der eine sich auf dem Boden des Reaktortanks abstützende Kerntragstruktur aufweist. Das zur Kühlung der Reaktortankwand dienende Kühlmittel wird einem verhältnismäßig kalten Reservoir entnommen, das an seiner Unterseite durch den Boden des Reaktortanks gebildet wird, seitlich durch einen umlaufenden, zylindrischen oder kegelstumpfförmigen Mantel und an seiner Oberseite durch eine kreisförmige, mit Öffnungen für den Durchtritt des Kühlmittels versehene Platte. Gespeist wird dieses Reservoir aus einem einige Prozent des gesamten Kühlmitteldurchsatzes ausmachenden Kühlmittelteilstrom, der der Niederhaltung der in einer Gitterplatte stehenden Kernelemente dient. Gesammelt und in den Ringraum geleitet wird das Kühlmittel mittels einer besonderen Sammeleinrichtung, die mit der Kerntragstruktur nicht in baulichem Zusammenhang steht. Die Menge des in diesem Reservoir enthaltenen Kühlmittels ist so groß, daß ein Austausch derselben bei dem verhältnismäßig geringen Durchsatz längere Zeit in Anspruch nimmt und sich plötzlich auftretende Temperaturänderungen im Kühlmittelstrom trotz der bekannt guten Wärmeübertragungseigenschaften von Flüssigmetallen nur langsam der ganzen Kühlmittelmenge bzw. den sie einschließenden Strukturen mitteilen. Andererseits würden sich bei Störungen im Betrieb des Kernreaktors (z. B. einem angenommenen Ausfall der Wärmeabfuhr über die Kühlkreisläufe und dem damit einhergehenden Temperaturanstieg im Kühlmittel) beispielsweise die Gitterplatte und die Deckelplatte des Reservoirs verhältnismäßig schnell aufheizen, während sich die Temperaturerhöhung den anderen Teilen der Kerntragstruktur und der Reaktortankwand nur sehr langsam mitteilen wird. Es muß dann mit dem Auftreten erheblicher Spannungen insbesondere in der Kerntragstruktur, einer verhältnismäßig steifen, verrippten Konstruktion gerechnet werden.

Aufgabe der vorliegenden Erfindung ist eine Abwandlung des zur Tankwandkühlung verwendeten Kühlmittelkreislaufes derart, daß nur solche Teile von schnellen Temperaturerhöhungen betroffen werden, die von ihrer Masse und Gestalt her besser geeignet sind, die dann entstehenden Wärmespannungen auszugleichen.

Die Lösung dieser Aufgabe erfolgt durch die im kennzeichnenden Teil des Anspruchs genannten Mittel. Die Kerntragstruktur kann mit größeren Öffnungen hergestellt werden, durch die hindurch ein schnellerer Ausgleich von anormalen Temperaturdifferenzen zwischen den Kühlmittelmengen im kalten Sammler und im von der Kerntragstruktur umschlossenen Raum stattfinden kann. Die Wärmespannungen in der ohnehin durch die Lastabtragung des Reaktorkerns stark belasteten Kerntragstruktur werden so vermindert. Für die Aufnahme des zunächst der hydraulischen Niederhaltung der Kernelemente in der Gitterplatte dienenden Kühlmittelteilstromes bedarf es dann eines besonderen, kleineren Behälters, der durch an sich flexiblere Rohrleitungen einerseits mit der Gitterplatte und andererseits mit dem der Tankwandkühlung dienenden Ringspalt verbunden ist. Immerhin sollte die Größe des Behälters so groß gewählt werden, daß er eine gewisse Pufferfunktion bei Temperaturschwankungen im Kühlmittel erfüllen kann und noch für eine längere Zeit kaltes Natrium für die Kühlung der Reaktortankwand zur Verfügung steht, nachdem etwa störfallbedingt die Temperatur im kalten Sammler angestiegen ist.

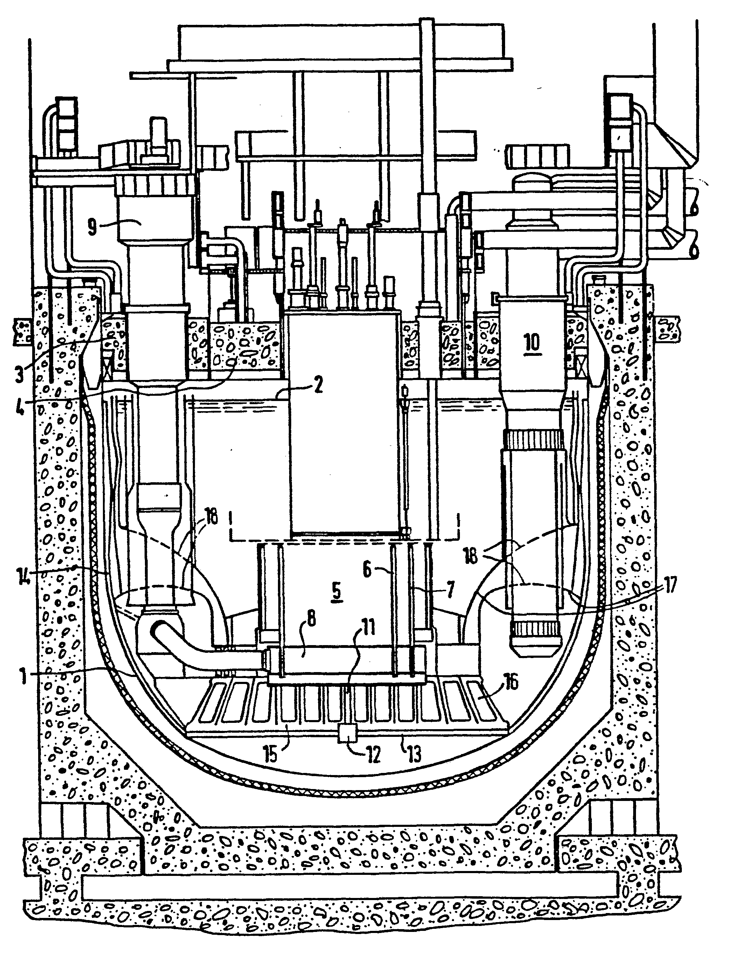

Ein Ausführungsbeispiel der Erfindung ist in der Zeichnung dargestellt und zwar im Längsaxialschnitt.

In einem Reaktortank 1, der bis zu einem Betriebsspiegel 2 mit flüssigem Natrium angefüllt ist und nach oben durch einen Deckel 3 mit eingesetzten Drehdeckeln 4 abgeschlossen ist, ist ein Reaktorkern 5 angeordnet, der aus einzelnen Brennelementen 6 und weiteren Elementen, z. B. Reflektorelementen 7 aufgebaut ist, von denen nur einzelne gezeigt sind. Die verschiedenen Elemente stecken in Öffnungen einer hohlen Gitterplatte 8. In diese fließt das von Pumpen 9 in Umlauf versetzte Kühlmittel, tritt in die Elemente ein und strömt zum größten Teil aufwärts durch diese in den oberen Teil des Reaktortanks 1, wobei die in den Brennelementen 6 erzeugte Wärme abgeführt wird. In die Kühlmittelfüllung eintauchende Zwischenwärmetauscher 10 führen die Wärme an einen Sekundärkreislauf ab. Ein kleiner Teil des in die Elemente 6, 7 eintretenden Kühlmittelstromes wird nach unten abgelenkt, bewirkt die hydraulische Niederhaltung der Elemente in der Gitterplatte 8 und fließt über Sammelrohre 11 in einen unterhalb des Kernverbandes angeordneten Sammelbehälter 12. Von hier aus wird das Kühlmittel über weitere Leitungen 13 in Ringräume geleitet, die durch die Reaktortankwand 1 und durch parallel dazu angeordnete zusätzliche Trennwände 14 gebildet werden. Da es sich dabei um kaltes, aus den Pumpen 9 kommendes Kühlmittel handelt, wird die Reaktortankwand in den betreffenden Bereichen gekühlt und vor der Einwirkung des im Oberen Teil des Reaktortanks befindlichen, aufgeheizten Kühlmittels bewahrt. Die die Gitterplatte 8 und damit den gesamten Reaktorkern 5 tragende, sich auf dem Boden des Tanks 1 abstützende Struktur 15 ist mit zahlreichen großen Öffnungen 16 versehen, durch die hindurch die von ihr umschlossene Kühlmittelmenge mit derjenigen in Verbindung steht, die den sogenannten "kalten Sammler" des Reaktortanks 1 füllt. Dieser ist durch Schalen 17 vom oberen, "heißen Sammler" getrennt, die mit weiteren Öffnungen 18 für die hindurchragenden Pumpen 9 und Zwischenwärmetauscher 10 versehen sind. Steigt, beispielsweise bei einem unterstellten Ausfall der Zwischenwärmetauscher 10, die Temperatur des Kühlmittels im kalten Sammler des Reaktortanks 1 an, so teilt sich dieser Temperaturanstieg der Gitterplatte 8 und den mit ihnen verbunden Leitungen 11, 13 sowie dem Sammelbehälter 12 wegen derer kleinen Massen verhältnismäßig schnell mit; wegen ihrer konstruktionsbedingten Elastizität werden die dadurch auftretenden Spannungen gut abgebaut. Gleiches gilt auch für die Kerntragstruktur 15, da sich der von ihr umschlossene Raum über die Öffnungen 16 schneller dem Temperaturniveau der restlichen Kühlmittelfüllung anpassen wird.

**Patentansprüche**

1. Flüssigmetallgekühlter Kernreaktor des sogenannten Pool-Typs
a) mit einer den Reaktorkern (5) tragenden Gitterplatte (8), die auf einer sich auf dem Boden des Reaktortanks (1) abstützenden Kerntragstruktur (15) ruht,
b) einem von der Kerntragstruktur (15) umschlossenen Raum, der mit dem abgekühltes Kühlmittel enthaltenden Saugraum der Kühlmittelpumpen (9) in Verbingung steht,
c) einer Sammeleinrichtung, die zur Aufnahme eines der Niederhaltung von Kernelementen (6, 7) in der Gitterplatte (8) dienenden Kühlmittelteilstromes dient und deren Wände nicht Teil der Kerntragstruktur (15) sind,
d) einem Kühlmittelraum, der sich von der Sammeleinrichtung bis zu den zu kühlenden Bereichen der Reaktortankwand (1) erstreckt, dadurch gekennzeichnet, daß
e) die Kerntragstruktur (15) Öffnungen (16) zu dem abgekühltes Kühlmittel enthaltenden Saugraum der Kühlmittelpumpen (9) aufweist,
f) an die Sammeleinrichtung ein besonderer Sammelbehälter (12) angeschlossen ist,
g) sich von dem Sammelbehälter (12) Kühlmittelleitungen (13) bis zu den zu kühlenden Bereichen der Reaktortankwand (1) erstrecken.

**Claim**

1. A liquid metal-cooled core reactor of the so-called pool type
a) having a grid plate (8) which carries the reactor core (5) and which rests on a core-supporting structure (15) which is supported on the base of the reactor tank (1),
b) a space surrounded by the core-supporting structure (15) and which is connected to the suction chamber of the cooling medium pumps (9) which contains cooled cooling medium,
c) a collecting device which serves to receive a cooling medium sub-stream which serves to hold down the core elements (6, 7) in the grid plate (8), and the walls of which device do not form part of the core-supporting structure (15),
d) a cooling medium space which extends from the collecting device to those regions of the wall of the reactor tank (1) which are to be cooled, characterised in that
e) the core-supporting structure (15) contains openings (16) to the suction chamber of the cooling medium pumps (9) which contains cooled cooling medium,
f) a special collecting vessel (12) is connected to the collecting device, and
g) cooling medium pipelines (13) extend from the collecting vessel (12) to those regions of the wall of the reactor tank (1) which are to be cooled.

**Revendication**

Réacteur nucléaire refroidi par du métal liquide du type dit piscine, comprenant:
a) un sommier (8) supportant le coeur du réacteur (5) et reposant sur un platelage (15) s'appuyant sur le fond de la cuve du réacteur (1),
b) une chambre qui est entourée par le platelage (15) et qui communique avec la chambre d'aspiration de la pompe (9) contenant de l'agent de refroidissement refroidi,
c) un dispositif collecteur qui sert à recevoir un courant partiel d'agent de refroidissement servant à maintenir les assemblages combustibles (6, 7) dans le sommier (8) et dont les parois ne font pas partie du platelage (15),
d) une chambre pour l'agent de refroidissement, qui s'étend du dispositif collecteur aux zones à refroidir de la paroi de la cuve du réacteur (1),
caractérisé en ce que

e) le platelage (15) comporte des orifices (16) conduisant à la chambre d'aspiration de la pompe (9) qui contient de l'agent de refroidissement refroidi,

f) un réservoir collecteur (12) particulier est raccordé au dispositif collecteur,

g) des conduits pour l'agent de refroidissement (13) vont du réservoir collecteur (12) aux zones à refroidir de la paroi de la cuve du réacteur (1).